# FASCICULE DE BREVET EUROPEEN

(11) **EP 1 337 982 B1**
(45) Date de publication et mention de la délivrance du brevet: **20.01.2010**
(21) Numéro de dépôt: 01997789.1
(22) Date de dépôt: 14.11.2001
(51) Int. Cl.: G07F 7/10

(54) **PROCEDE ET DISPOSITIF D'AUTHENTIFICATION**
AUTHENTIFIZIERUNGSVERFAHREN UND -EINRICHTUNG
AUTHENTICATING METHOD AND DEVICE

(30) Priorité: 21.11.2000 FR 0015007
(43) Date de publication de la demande: 27.08.2003
(73) Titulaire: CB Investissements, 75008 Paris (FR)
(72) Inventeur: MEGGLE, Claude, F-75014 Paris (FR)
(74) Mandataire: Loisel, Bertrand
(86) Numéro de dépôt international: PCT/FR2001/003569
(87) Numéro de publication internationale: WO 2002/043016

(56) Documents cités:
- WO-A-00/26838
- FR-A- 2 779 018
- US-A- 4 731 842
- US-A- 5 517 569
- US-A- 5 936 149
- US-A- 6 098 053
- RANKL W.: 'Handbuch der Chipkarten', 1998, CARL HANSER
- SCHNEIER B.: 'applied cryptography', 1996, JOHN WILEY AND SONS
- MENEZES: "Handbook of applied cryptography" 1997, CRC PRESS

## Description

Le domaine de l'invention est celui de l'authentification de documents électroniques au moyen d'une signature numérique.

On entend ici par document électronique une suite de nombres sous forme binaire qui code des données informatiques.

La matérialisation de documents sous forme électronique présente de nombreux avantages, facilité de stockage, de duplication, de modification, de transmission. Cependant pour certains usages, ces avantages se transforment en inconvénients.

Par exemple dans le cadre du commerce électronique au moyen de systèmes ouverts, la transmission de données relatives à une référence de compte et à un montant à débiter est facilitée par des réseaux ouverts tels qu'Internet. Ces données sont facilement interprétables dans un dialogue entre système ouvert émetteur et système ouvert récepteur. Cependant, sans précaution particulière, la duplication, la modification, la transmission de ces données sont aussi faciles pour un système interceptant les messages que pour les systèmes émetteurs et récepteurs authentiques.

De façon connue, la cryptographie permet de chiffrer le contenu d'un document de sorte que seul le système récepteur authentique puisse interpréter le contenu du document.

On distingue la cryptographie symétrique, où une même clé secrète sert à chiffrer et déchiffrer le document, et la cryptographie asymétrique, où un couple de clés distinctes, l'une privée l'autre publique, est utilisé.

La cryptographie symétrique est adaptée pour un dialogue au sein d'un couple émetteur récepteur unique avec confiance réciproque car l'émetteur et le récepteur partagent secrètement la même clé.

La cryptographie asymétrique est mieux adaptée pour établir un dialogue avec de nombreux intervenants potentiels. C'est le cas dans le commerce électronique où tout acheteur doit pouvoir se mettre en relation privée avec tout vendeur et tout établissement financier.

Lorsque la clé privée est détenue par le système récepteur, tout système émetteur peut chiffrer un document au moyen de la clé publique et le transmettre au système récepteur. Seul le système récepteur peut déchiffrer le document au moyen de la clé privée. Ceci assure la confidentialité du document transmis.

Lorsque la clé privée est détenue par le système émetteur, il est le seul à pouvoir chiffrer le document. Tout système récepteur peut déchiffrer le document, ceci avec l'assurance que le système émetteur qui a transmis le document, est celui qui possède la clé privée.

La mise en oeuvre de la cryptographie asymétrique se révèle plus lente que celle de la cryptographie symétrique étant donné que les algorithmes mis en jeu requièrent davantage de calculs. Pour satisfaire des objectifs de rapidité de traitement il convient d'appliquer le chiffrement au moyen d'une clé privée, à des documents de taille faible. Ce mode de chiffrement est bien adapté pour authentifier un émetteur et pour authentifier la véracité d'un document.

Par exemple, pour authentifier un émetteur, le récepteur envoie un document constitué d'une séquence aléatoire à l'émetteur. L'émetteur chiffre le document reçu au moyen de sa clé privée et transmet le document chiffré au récepteur. Le récepteur déchiffre le document chiffré au moyen de la clé publique qu'il sait être celle de l'émetteur. En comparant le résultat à la séquence aléatoire initialement transmise, le récepteur est assuré que l'émetteur est bien celui prévu si le résultat est identique à la séquence aléatoire initialement transmise car l'émetteur prévu est le seul à pouvoir chiffrer le document au moyen de sa clé privée.

Pour authentifier un document original, l'émetteur applique une fonction déterminée au document de façon à obtenir un document qui est généralement de taille réduite. La fonction déterminée peut notamment être une fonction de hachage à sens unique. L'émetteur chiffre le document de taille réduite au moyen de sa clé privée et transmet le document de taille réduite ainsi chiffré au récepteur, accompagné du document original en clair. Le récepteur applique la fonction de hachage à sens unique au document original reçu et déchiffre le document de taille réduite chiffré reçu, au moyen de la clé publique qu'il sait être celle de l'émetteur. Si le résultat de la fonction de hachage est identique à celui du déchiffrement, le récepteur est assuré que le document reçu en clair est identique au document original de l'émetteur.

Un document de taille réduite chiffré au moyen de la clé privée de l'émetteur tel que celui décrit au paragraphe précédent est encore appelé signature électronique du document original. La clé privée est alors souvent appelée clé de signature pour la distinguer d'une clé privée de déchiffrement. Un choix de clés privées différentes pour le déchiffrement et pour la signature, permet d'éviter certaines attaques connues.

Dans le cadre du commerce électronique, si le document original contient un montant à débiter pour valider un achat, un système intermédiaire ne peut pas modifier le montant à débiter car la signature électronique ne correspondrait plus au document original. Toute modification du document original est impossible par un système intermédiaire qui ne connaît pas la clé privée de l'émetteur et a donc peu de chances de pouvoir recréer une nouvelle signature électronique valide.

Une duplication du document original et de sa signature pourrait permettre au système intermédiaire de transmettre à nouveau le document original avec une signature valide au récepteur de façon par exemple à débiter plusieurs fois le compte de l'émetteur. Divers moyens permettent d'éviter cet inconvénient tels que par exemple l'insertion d'une date dans le document original.

L'intérêt de la signature électronique qui ressort des explications précédentes ne se limite pas au commerce électronique. Les domaines d'application sont nombreux et variés. La signature électronique peut servir par exemple à authentifier un accord donné sur un contrat, des références de dossier médical, etc.

Cependant de nombreux problèmes restent posés pour augmenter la confiance accordée à une signature électronique, tant pour une personne émettrice que pour une personne réceptrice.

Pour une personne émettrice utilisant un système ouvert tel qu'un ordinateur personnel, une incursion par une personne malveillante dans l'ordinateur peut y placer des composants qui détournent les actions de la personne émettrice sur l'ordinateur personnel. Une incursion physique est possible en absence de la personne émettrice, une incursion logique par le réseau est possible même en présence de la personne émettrice, l'aptitude des virus informatiques à modifier le comportement de programmes est par exemple bien connue. Les visées de telles incursions sont nombreuses, accéder à la valeur de la clé privée, remplacer la valeur de la clé privée par une valeur connue, remplacer le document original par un autre document avant le moment où le document original est appelé à être haché ou chiffré.

Les motifs légitimes d'inquiétude de la personne émettrice se répercutent à la personne réceptrice. Même si la personne réceptrice reçoit une signature valide, la personne émettrice peut vouloir répudier cette signature en prétextant qu'elle a été faite à son insu.

Une détention secrète de la clé privée par la personne émettrice elle-même est de fiabilité discutable. La personne émettrice peut vouloir prétendre que la valeur de clé secrète lui a été soustraite dans un moment d'égarement ou plus simplement au moment de sa communication au système cryptographique.

Le document WO-1-0026838 décrit un appareil pour effectuer des transactions comprenant un boîtier auquel sont intégrés un circuit d'interface pour recevoir un apport d'identification comprenant un circuit logique d'identification, des moyens d'interface homme machine pour présenter des données transactionnelles et recueillir des données d'identification ainsi que des commandes de signature des données transactionnelles, et un circuit protégé pour délivrer une signature des données transactionnelles.

Le document US5936149 décrit un appareil similaire comportant une protection contre les infractions telle que, lors d'une tentative d'infraction de l'appareil, la clé stockée dans la mémoire est détruite par effacement.

Le document de W. Rankl et al. « Handbuch der Chipkarten » editeur Carl Hanser, 1998 divulgue que les circuits utilisés dans les cartes à puce comportent un numéro de série gravé en mémoire.

Les livres de B. Schneier « Applied Cryptography », éditeur John Wiley and Sons, 1996, p. 185-187- et de A.J. Menezes et al. « Applied Cryptography », éditeur CRC Press, 1997, p.555-556 décrivent les procédures classiques de gestion des clés publiques et de certification de celles-ci par un serveur de confiance ou par un annuaire de clés publiques.

Pour pallier les inconvénients qui ressortent de l'état actuel de la technique, l'invention a pour objet un appareil pour effectuer des transactions selon la revendication 1.

Un autre objet de l'invention est un procédé de fabrication d'un appareil pour effectuer des transactions selon la revendication 3.

Un autre objet de l'invention est un procédé pour effectuer des transactions au moyen d'un appareil constitué d'un boîtier qui laisse une trace visible de toute tentative d'effraction selon la revendication 7

D'autres détails et avantages ressortent de la description d'un mode de mise en oeuvre de l'invention, telle qu'elle suit en référence aux figures où :
- la figure 1 présente un appareil conforme à l'invention ;
- la figure 2 présente un procédé de fabrication conforme à l'invention ;
- la figure 3 présente un environnement possible de mise en oeuvre de l'invention ;
- la figure 4 présente un procédé d'utilisation conforme à l'invention;
- la figure 5 présente un circuit protégé conforme à l'invention.

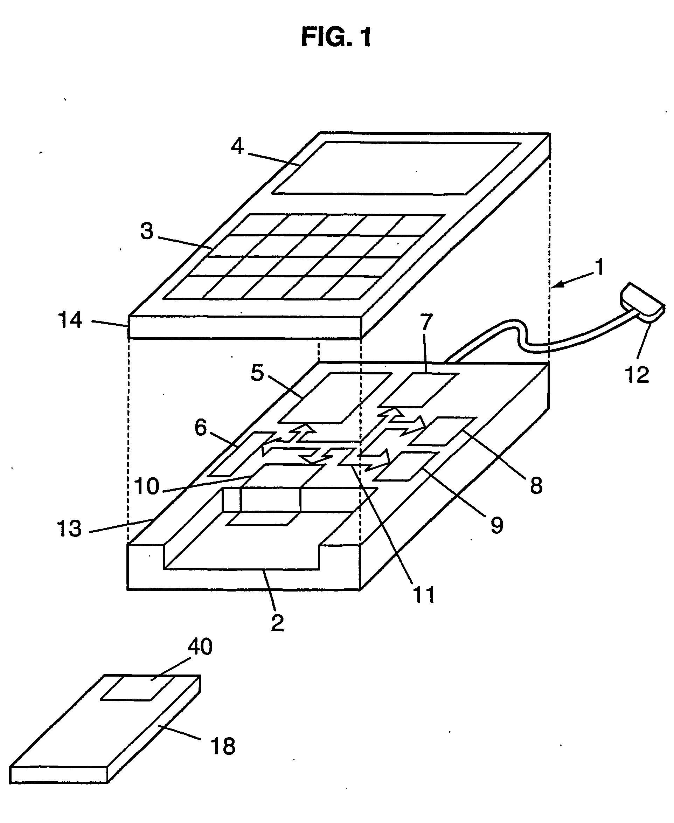

La figure 1 présente en vue schématique éclatée, un appareil 1, objet de l'invention. Cet appareil comporte un boîtier protégé contre les effractions. Cette protection peut être de différents niveaux:
- le boîtier peut présenter des traces visibles, par exemple cassure de la coque, dès qu'il se produit une tentative d'effraction (niveau "tamper evident");
- le boîtier peut avoir une structure robuste de façon à résister aux tentatives d'effraction (niveau "tamper resistant");
- le boîtier peut détecter toute tentative d'effraction pour détruire ou endommager gravement des composants de l'appareil (niveau "tamper responsive").

Dans l'illustration, le boîtier se compose de deux demi boîtiers 13 et 14. En sortie de fabrication, le demi-boîtier inférieur 13 et le demi boîtier supérieur 14 forment un boîtier unique tel que toute tentative d'effraction ou toute effraction laisse une trace visible, cassure ou destruction.

L'appareil 1 comprend une ouverture 2 dans laquelle il est possible d'introduire un support d'identification 18. Le support d'identification 18 a pour fonction celle d'une clé physique d'utilisation de l'appareil. Le support d'identification 18 comprend un circuit logique d'identification 40 de manière connue par exemple lorsque le support d'identification est une carte à puce.

Une introduction du support d'identification dans l'ouverture 2 se fait jusqu'à mettre le circuit d'identification 40 en contact avec un circuit d'interface 10 relié à un bus système 11 interne à l'appareil 1.

Un circuit électrique logique 9 est relié au bus système 11 pour exécuter une ou des séquences de dialogue avec l'objet physique d'identification. De façon avantageuse, les séquences de dialogue font partie de programmes stockés dans une mémoire à accès aléatoire 5 reliée au bus système 11. Le circuit électrique logique 9 est alors un microprocesseur qui exécute des instructions de programme au moyen d'un système d'exploitation stocké lui aussi dans la mémoire à accès aléatoire 5.

Une interface opérateur sur le boîtier de l'appareil 1, comprend un clavier à touches 3 et un écran 4. Le clavier à touches 3 et l'écran 4 son fixement reliés dans l'appareil 1, à un circuit d'entrée-sortie 8. Le circuit d'entrée-sortie 8 relié au bus système 11, permet au circuit logique 9 d'exécuter une ou des séquences de dialogue avec l'interface opérateur au moyen des programmes stockés dans la mémoire à accès aléatoire 5.

Un circuit de communication 7 relié à l'intérieur du boîtier au bus système 11 et à l'extérieur du boîtier à un connecteur 12, permet au circuit logique 9 d'exécuter une ou des séquences de communication au moyen des programmes stockés dans la mémoire à accès aléatoire 5. Le connecteur 12 est prévu pour être relié à un ordinateur, un réseau câblé, un modem ou un réseau aérien. Suivant le mode de raccordement choisi, le connecteur 12 est un connecteur à broches, un émetteur récepteur infrarouge ou une antenne.

L'appareil 1 comprend encore un circuit protégé 6. Le circuit 6 est par exemple de type circuit intégré, protégé par une enveloppe robuste qui résiste aux tentatives d'effraction (niveau "tamper resistant") ou dont toute tentative d'effraction endommage le circuit 6 (niveau "tamper responsive").

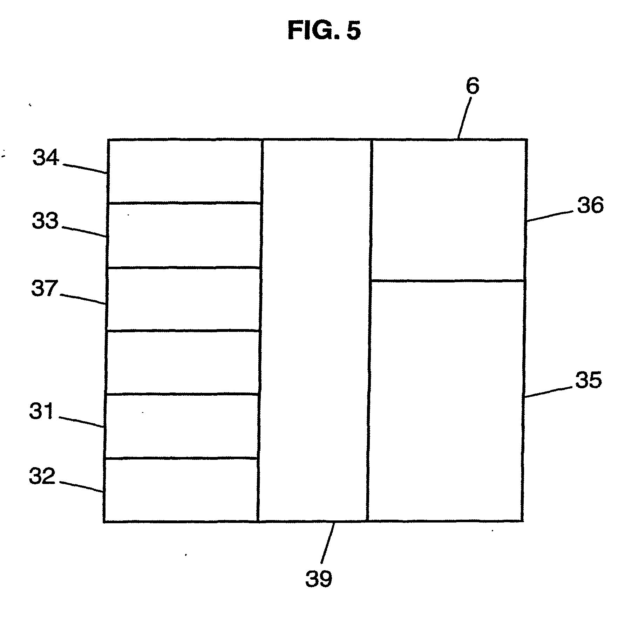

En référence à la figure 5, le circuit protégé 6 comprend une partie dialogue 18 et une partie mémoire 36 à accès en lecture seule. La partie dialogue 18 est prévue pour échanger des informations avec le bus 11. La partie mémoire 36 est de type non effaçable telle que par exemple une mémoire ROM. La partie mémoire 36 contient des données qui y ont été inscrites lors de la fabrication de l'appareil 1.

En particulier, la partie mémoire 36 contient une clé logique privée SK-DEV. Le circuit protégé 6 comprend aussi une partie de traitement arithmétique et logique 39 pour exécuter au moyen d'un système d'exploitation, des fonctions microprogrammées contenues dans une partie mémoire à accès aléatoire 35 du circuit protégé 6. Parmi les fonctions microprogrammées, on distingue des fonctions de chiffrement de données au moyen de la clé privée SK-DEV et d'algorithmes connus en cryptographie. Parmi les fonctions microprogrammées, on distingue aussi des fonctions d'ordonnancement pour activer les fonctions de chiffrement en réponse à des commandes reçues par la partie dialogue 31. Le circuit protégé 6 est réalisé de façon à ce que la valeur de la clé logique privée SK-DEV ne peut jamais être transmise à l'extérieur du circuit protégé 6.

Ainsi, lorsque le circuit protégé 6 reçoit sur sa partie dialogue 31, des données transactionnelles et des commandes pour signer les données transactionnelles, les fonctions d'ordonnancement activent les fonctions de chiffrement à l'intérieur du circuit protégé 6, de façon à chiffrer au moins une partie des données transactionnelles au moyen de la clé privée SK-DEV qui reste confinée dans le circuit protégé 6. La clé privée SK-DEV est alors une clé de signature et la signature obtenue est mise à disposition par le circuit protégé 6 sur sa partie dialogue 31.

Une variante de réalisation possible du circuit protégé 6 consiste à y intégrer un premier module d'entrée-sortie 32 destiné à être relié directement au circuit d'interface 10, un deuxième module d'entrée-sortie 34 destiné à être relié directement à l'écran 4, un troisième module d'entrée-sortie 33 destiné à être relié directement au clavier 3, un quatrième modules d'entrée-sortie 37 destiné à être relié directement aux moyens de communication tels que le connecteur 12. Les modules 33 et 34 remplacent alors le circuit d'entrée sortie 8 dans l'appareil 1. Le module 37 remplace le circuit de communication 7.

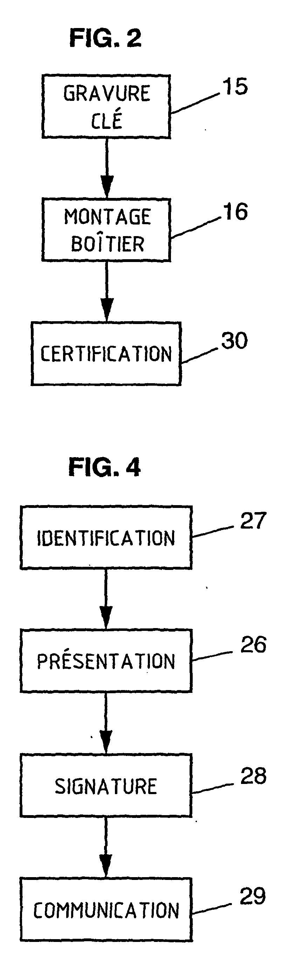

En référence à la figure 2, le procédé de fabrication de l'appareil 1 comprend une étape 15 dans laquelle est créé un couple de clés logiques de chiffrement au moyen d'un générateur de nombres selon des méthodes connues dans le domaine de la cryptographie, de façon à ce que ce couple de clés permette de mettre en oeuvre un cryptosystème à clé publique connu tel que par exemple RSA. Une première clé constitue la clé privée SK-DEV qui est gravée dans la partie mémoire 36 du circuit protégé 6 dès la création du couple de clés, et ceci de façon à ce qu'aucune copie de la valeur de la clé privée SK-DEV ne subsiste ailleurs que dans le circuit protégé 6.

Les opérations du générateur de nombre depuis la création du couple de clés jusqu'à la gravure de la clé privée dans le circuit protégé 6 sont occultées de sorte que le fabriquant de l'appareil ne puisse jamais avoir connaissance de la clé privée SK-DEV.

La deuxième clé du couple constitue une clé publique PK-DEV qui elle, n'est pas nécessairement conservée dans la partie mémoire non effaçable 36 mais peut l'être ailleurs en vue de traitements ultérieurs.

Toutefois, graver la clé publique PK-DEV dans la partie mémoire non effaçable 36 procure un avantage supplémentaire, celui de s'assurer que la clé publique ne sera jamais perdue tant que le circuit protégé 6 ne sera pas altéré. La conservation de la clé publique sur un autre support, mémoire à accès aléatoire 5 de l'appareil, base de donnée extérieure, inscription visible, est acceptable mais nécessite cependant une gestion adaptée à une conservation sure de la clé publique PK-DEV.

Un autre avantage supplémentaire est procuré en gravant aussi dans la partie mémoire 36 non effaçable du circuit protégé 6, un numéro d'identification de l'appareil 1. Comme une gravure sur une plaque constructeur, le numéro d'identification permet de faire un suivi de l'appareil. La gravure du numéro d'identification dans la partie mémoire non effaçable 36 rend disponible cette donnée pour effectuer des traitements informatiques. Le numéro d'identification est par exemple constitué d'une première série de caractères qui identifie le fabriquant de l'appareil et d'une deuxième série de caractères qui identifie l'appareil dans le lot de ceux produits par le fabriquant.

Dans une étape 16, les composants 7 à 11 sont montés dans le demi boîtier inférieur 13. Le clavier à touche 3 et l'écran 4 sont montés sur le boîtier et sont raccordés au circuit d'entrée sortie 8, le connecteur 12 est raccordé au circuit de communication 7 et le demi boîtier supérieur 14 est fixé sur le demi boîtier inférieur 13 de façon à constituer un boîtier unique qui enferme hermétiquement les composants 5 à 11, et de façon à ce que le boîtier ainsi constitué ne puisse plus être réouvert sans y provoquer une altération irréversible et clairement visible.

Divers méthodes connues sont possibles pour faire que toute ouverture, pénétration, tentative d'ouverture ou de pénétration, laisse une trace visible d'effraction. On peut munir le demi boîtier inférieur 13 et le demi boîtier supérieur 14 de clips à enfichage unique avec cassure au désenfichage. Au lieu de deux demi boîtiers, on peut noyer les divers éléments de l'appareil 1 dans une résine homogène.

Tant le procédé de fabrication que la structure inviolable de l'appareil 1 fait que la valeur de la clé privée SK-DEV n'est connue de personne. La valeur de la clé SK-DEV est inconnue du fabriquant car sa création par le générateur aléatoire de nombres et sa gravure dans le circuit protégé 6 ne sont pas accessibles.

La valeur de la clé SK-DEV est inconnue de toute personne ayant l'appareil entre les mains car le système d'exploitation de l'appareil 1 ne permet pas de lecture de la valeur de la clé privée SK-DEV. En particulier, la valeur de la clé privée SK-DEV ne peut pas être communiquée au circuit d'entrée-sortie 8 et donc, ne peut jamais apparaître sur l'écran 4. Ainsi, tout utilisateur de l'appareil 1 ne risque pas de divulguer, volontairement ou involontairement, la valeur de la clé privée SK-DEV.

La valeur de la clé privée SK-DEV de l'appareil, est inconnue de toute personne ou de tout système en communication avec l'appareil car cette valeur ne peut pas être recopiée ni dans la mémoire à accès aléatoire 5, ni dans le circuit d'interface 10, ni dans le circuit de communication 7.

La seule solution qui reste à un individu malveillant est celle d'ouvrir le boîtier de l'appareil 1 par exemple pour corrompre le système d'exploitation en remplaçant un ou plusieurs des composants 5 à 11 ou pour tenter d'interférer avec le circuit protégé 6. Cependant la constitution du boîtier fait que cette ouverture laisse nécessairement des traces d'effraction visibles. Devant ces traces d'effraction visibles, le détenteur de l'appareil a conscience que toute utilisation se fait à ses risques et périls et qu'il se doit de signaler cette effraction au même titre qu'il se doit de signaler une perte de l'appareil pour faire opposition définitive à toute utilisation future. De plus, même une ouverture du boîtier ne permet pas de prendre connaissance de la clé privée SK-DEV car celle-ci reste confinée dans le circuit protégé 6.

L'ordre dans lequel sont représentées les étapes 15 et 16 sur la figure 2, est sans importance. L'étape 16 peut précéder l'étape 15 si le circuit protégé 6 génère lui-même le couple de clés lorsque celui-ci est déjà monté dans le boîtier.

Une étape de certification 30 permet au fabriquant de certifier l'origine de l'appareil (1). Pendant l'étape 30, le fabriquant élabore une chaîne de caractères comprenant au moins la clé publique PK-DEV de l'appareil ou un numéro d'identification de l'appareil. La chaîne de caractère est chiffrée au moyen d'une clé privée SK-FAB du fabriquant, de façon à obtenir une signature de certification. La signature de certification est mémorisée dans l'appareil. L'étape 30 peut être mise en oeuvre en même temps que l'étape 15. L'étape 30 peut aussi être mise en oeuvre après fabrication, par exemple pour certifier à nouveau l'appareil 1 suite à une révision. L'appareil 1 contient alors un programme qui vérifie une concordance de la signature de certification avec certaines données telles que la clé publique PK-DEV de l'appareil ou le numéro d'identification de l'appareil, stockées dans le circuit protégé 6, lors d'un chargement de la signature de certification en mémoire 5 ou 35.

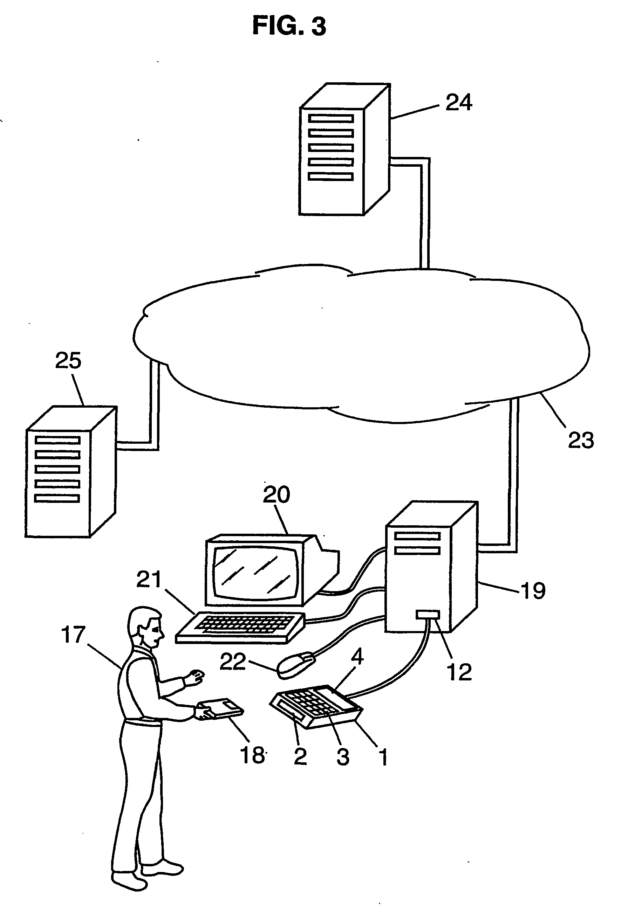

La figure 3 montre un environnement possible d'utilisation de l'appareil 1.

Un individu émetteur 17 consulte par exemple un catalogue d'achats en ligne au moyen d'un ordinateur personnel 19 muni d'un écran 20, d'un clavier 21 et d'une souris 22. L'ordinateur 20 est raccordé à un réseau ouvert 23, par exemple l'Internet, auquel sont également raccordés des serveurs 24, 25. Le serveur 25 transmet sur le réseau 23 des pages du catalogue d'achats en ligne. L'individu émetteur 17 sélectionne sur l'écran 20 au moyen de la souris 22 un article d'une page de catalogue dont le prix est affiché. L'individu émetteur 17 déclenche ensuite une transaction pour commander et payer cet article.

Cette transaction permet à un organisme vendeur détenteur du serveur 25, de se faire payer par un organisme financier détenteur du serveur 24, de façon à livrer l'article sélectionné à l'individu émetteur 17.

L'individu émetteur 17 veut être sûr que le montant débité de son compte sur le serveur 24 se limite au montant qui correspond au prix d'achat de l'article sélectionné. Le montant débité ne doit donc pas pouvoir être modifié dans le système informatique ouvert qui comprend l'ordinateur personnel 19, le réseau ouvert 23, le serveur 24 et/ou le serveur 25. Dans le cadre particulier d'une transaction financière, l'individu émetteur veut de plus être prémuni contre un débit multiple du montant sur lequel il donne une seule fois son accord.

Le serveur 25 doit être assuré que le montant de la transaction est incontestablement débité à son profit par le serveur 24. En particulier, la transaction ne doit pas pouvoir être répudiée de façon incontrôlée.

Le serveur 24 doit être assuré que la transaction est véritablement déclenchée avec l'accord de l'individu émetteur 17.

Pour garantir la confiance des intervenants à la transaction, la transaction met en oeuvre un procédé d'authentification du montant à débiter qui marque avec certitude l'accord de l'individu 17. Dans l'exemple de la figure 3, le montant à débiter fait partie de données transactionnelles à signer au moyen du procédé expliqué maintenant en référence à la figure 4.

Pendant une étape de présentation 26, la donnée transactionnelle à signer, est communiquée à l'appareil 1 précédemment décrit. L'appareil 1 affiche alors la donnée transactionnelle à signer, sur l'écran 4.

Lorsque dans l'exemple de la figure 3, l'individu 17 tient entre ses mains l'appareil 1, il a de bonnes raisons de faire confiance au montant affiché sur l'écran 4 car il peut contrôler que le boîtier n'a aucune trace visible d'effraction et donc que ce montant est bien celui effectivement traité par l'appareil 1.

L'individu émetteur 17 peut par exemple en mode itinérant, communiquer lui-même le montant de la transaction à l'appareil 1 en utilisant le clavier 3. Faire communiquer le montant de la transaction à l'appareil 1 par le système informatique offre l'avantage d'une plus grande simplicité lorsque l'appareil 1 dispose d'une liaison de communication avec l'ordinateur personnel 19 sur la figure 3, au moyen du connecteur 12.

Pendant une étape d'identification 27, un support d'identification 18 est mis en contact avec le circuit d'interface 10. Un code est tapé sur le clavier 3 pour identifier la personne qui effectue la transaction.

Dans l'exemple de la figure 3, l'objet physique d'identification est typiquement une carte de crédit que l'individu 17 introduit dans l'ouverture 2 jusqu'à mise en contact avec le circuit d'interface 10. Le code tapé est typiquement son code confidentiel à quatre chiffres suivi d'une validation. L'individu 17 se fait ainsi reconnaître par l'appareil 1.

Le circuit logique 9 exécute une séquence d'instructions stockée en mémoire 5 pour transmettre à l'objet d'identification 18, la valeur du code tapé sur le clavier 3. Dans le cas où le circuit protégé 6 est directement raccordé au clavier 3 et au circuit d'interface 10, le circuit protégé 6 exécute une séquence d'instructions stockée en mémoire 35 pour transmettre à l'objet d'identification 18, la valeur du code tapé sur le clavier 3. Si le code correspondant est reconnu par le support d'identification, celui-ci émet un signal d'identification sur le circuit d'interface 10 à destination du circuit protégé 6, effectuant ainsi une identification de l'individu qui a tapé le code. Dans l'interface homme-machine, le clavier 3 peut être remplacé par des moyens de reconnaissance bio métrique; dans ce cas, une donnée bio métrique de l'individu 17 est substituée au code précédemment mentionné.

Pendant une étape de signature 28, l'individu 17 tape une commande de signature sur le clavier 3. La commande de signature est transmise au circuit protégé 6 dans le boîtier. A réception de la commande de signature, s'il a reçu le signal d'identification, le circuit protégé 6 exécute une opération de chiffrement qui porte sur la donnée transactionnelle affichée sur l'écran 4. L'opération de chiffrement accède à la clé privée de signature SK-DEV confinée dans la partie mémoire non effaçable 36 du circuit protégé 6 à l'intérieur du boîtier, signant ainsi avec certitude la donnée affichée sur l'écran 4.

Lorsqu'on souhaite signer la donnée affichée sur l'écran 4, corrélativement à une autre donnée transactionnelle, les données sont concaténées par le circuit logique 9 ou directement par le circuit protégé 6 avant l'opération de chiffrement.

L'autre donnée transactionnelle concerne par exemple les références d'un compte à débiter. Ces références sont dans l'exemple de la figure 3, procurées par l'objet physique d'identification 18 qui est une carte de crédit.

Pendant l'étape de signature 28, il est avantageux d'appliquer une fonction de hachage à sens unique avant l'opération de chiffrement. La fonction de hachage permet de réduire la taille d'une chaîne de données à chiffrer et d'accélérer ainsi l'opération de chiffrement au moyen de la clé privée et une opération de déchiffrement au moyen de la clé publique. Le fait pour la fonction de hachage d'être à sens unique rend difficile à un tiers de créer une autre chaîne de données telle que l'application de la fonction de hachage à cette autre chaîne de données donne le même résultat que la fonction de hachage appliquée à la chaîne de données originale.

Dans l'exemple de la figure 3, il est intéressant d'ajouter une étape de communication 29. Pendant l'étape de communication 29, le résultat du chiffrement est émis sous forme de message à destination du système informatique au moyen du connecteur 12 en liaison avec l'ordinateur 19.

L'étape d'identification 27 peut précéder l'étape de présentation 26, par exemple pour permettre à l'individu 17 de se faire identifier en vue de plusieurs transactions successives pour chacune desquelles l'étape de présentation 27 et l'étape de signature 28 sont alors répétées.

Ainsi les étapes 26 à 28 assurent à l'individu 17 que l'appareil 1 a signé le montant affiché sur l'écran 4, en le concaténant pour le cas particulier d'une transaction financière au numéro de compte à débiter. En déchiffrant le message émis en étape 29, au moyen de la clé publique correspondant à la clé privée de l'appareil 1, le serveur 24 est-assuré que le message a bien été émis par l'appareil 1 sans avoir pu être corrompu par le système informatique car la clé privée de signature est confinée dans le circuit protégé 6 à l'intérieur de l'appareil 1. Le serveur 24 peut alors débiter le compte référencé dans te message du montant transmis dans le message car l'appareil 1 authentifie qu'un accord a été donné au moyen de la carte de crédit 18 et de son code confidentiel. Le serveur 25 a de bonnes raisons de croire que la transaction entre l'individu 17 et le serveur 24 ne sera pas répudiée car celle-ci s'est faite dans un mode hautement sécuritaire.

On peut concevoir que le serveur 24 prend connaissance de la clé publique de l'appareil 1 en consultant une base de donnée qui répertorie tous les appareils 1 dignes de confiance. La tenue à jour de cette base de donnée nécessite alors un minimum de gestion. Il est plus simple et plus rapide que l'appareil 1 transmette lui-même sa clé publique pendant l'étape 29. Ceci présente un danger si un élément du système informatique tente de simuler l'appareil 1 en créant un couple de clés privées et publiques.

Pour éviter le danger précédemment mentionné, l'appareil 1 émet à destination du système informatique, une chaîne de caractères comprenant une valeur de clé publique duale de sa clé privée de signature, en émettant simultanément une deuxième signature dite signature de certification. Pour assurer que l'appareil 1 est un appareil légitime, le fabriquant applique une fonction de hachage à sens unique à la chaîne de caractères et chiffre le résultat de la fonction de hachage au moyen d'une clé privée SK-FAB du fabriquant. Le résultat du chiffrement constitue alors la signature de certification que le fabriquant stocke avec la chaîne de caractères dans l'appareil 1. Le serveur 24 n'a alors besoin de connaître que la clé publique du fabriquant PK-FAB, commune à de nombreux appareils 1. En effet, lorsque l'appareil 1 transmet la chaîne de caractères contenant la clé publique PK-DEV de l'appareil en clair, avec la signature de certification au système informatique, il suffit au serveur 24 d'appliquer la fonction de hachage à sens unique à la chaîne de caractère contenant la clé publique PK-DEV de l'appareil 1 et à déchiffrer la signature de certification au moyen de la clé publique PK-FAB du fabriquant. Si le résultat de la fonction de hachage est identique au résultat du déchiffrement, le serveur 24 est assuré que la clé publique de l'appareil 1 est une clé publique légitime et donc que l'appareil 1 a été utilisé de façon certaine pour signer tout ou partie des données transactionnelles.

## Revendications

1. Appareil (1) pour effectuer des transactions comprenant un boîtier ayant une protection contre les effractions auquel sont intégrés:
- un circuit d'interface (10) pour recevoir un support d'identification comportant un circuit logique d'identification;
- des moyens d'interface homme-machine (3,4) pour présenter des données transactionnelles à un utilisateur et recueillir de l'utilisateur des données d'identification transmises au circuit logique du support via le circuit d'interface (10) ainsi que des commandes de signature en relation avec les données transactionnelles présentées;
- un circuit protégé (6) pour délivrer une première signature des données transactionnelles présentées en réponse aux commandes de signature lorsque l'identification a été effectuée, ladite signature étant obtenue en chiffrant une partie au moins des données transactionnelles au moyen d'une clé privée de signature stockée de façon non effaçable dans ledit circuit protégé, ledit circuit protégé contenant une clé publique duale de ladite clé privée, stockée de façon non effaçable, un numéro d'identification de l'appareil, stocké de façon non effaçable, et une mémoire (5, 35) contenant une signature certifiant une origine de l'appareil (1) pour délivrer ladite signature de certification avec ladite clé publique.

2. Appareil (1) pour effectuer des transactions selon la revendication 1, **caractérisé en ce qu'**il comprend un moyen de communication (12) pour échanger des données avec un système informatique.

3. Procédé de fabrication d'un appareil (1) pour effectuer des transactions, **caractérisé en ce qu'**il comprend:
- une étape de gravure (15) pendant laquelle est généré secrètement un couple de clés cryptographiques duales, constitué d'une clé publique et d'une clé privée de l'appareil, la clé privée étant immédiatement gravée dans un circuit protégé (6) de façon à ne pouvoir laisser aucune trace en dehors dudit circuit protégé (6);
- une étape de montage (16) pendant laquelle une interface homme-machine (3,4) est montée sur un boîtier, le circuit protégé(6) et un circuit d'interface (10) sont montés dans ledit boîtier et pendant laquelle le dit boîtier est fermé de façon à ne plus pouvoir être ouvert ou pénétré sans laisser de trace visible d'effraction.

4. Procédé de fabrication d'un appareil (1) pour effectuer des transactions selon la revendication 3, **caractérisé en ce que** pendant l'étape de gravure (15); la clé publique est gravée dans le circuit protégé (6).

5. Procédé de fabrication d'un appareil (1) pour effectuer des transactions selon la revendication 3 ou 4, **caractérisé en ce que** pendant l'étape de gravure (15), un numéro d'identification de l'appareil (1) est gravé dans le circuit protégé (6).

6. Procédé de fabrication d'un appareil (1) pour effectuer des transactions selon l'une des revendications 3 à 5, **caractérisé en ce qu'**il comprend une étape de certification pendant laquelle une chaîne de caractères comprenant au moins la clé publique ou le numéro d'identification, est chiffrée au moyen d'une clé fabriquant privée, de façon à obtenir une signature certifiant l'origine de l'appareil (1) et **en ce que** cette signature est mémorisée dans l'appareil.

7. Procédé pour effectuer des transactions au moyen d'un appareil (1) constitué d'un boîtier qui laisse une trace visible de toute tentative d'effraction, ledit boîtier comprenant des moyens d'interface homme-machine (3,4) et un circuit d'interface (10) avec un objet physique d'identification, **caractérisé en ce qu'**il comprend:
- une étape de contrôle que le boîtier ne porte aucune trace visibled'effraction ;
- une étape de présentation pendant laquelle au moins une donnée transactionnelle est communiquée à l'appareil (1) qui l'affiche sur les moyens d'interface homme-machine (3,4);
- une étape d'identification pendant laquelle un support d'identification comportant un circuit logique d'identification est mis en contact avec le circuit d'interface (10) et des premières données d'identification sont recueillies de l'utilisateur par les moyens d'interface homme-machine (3,4) puis transmises au circuit logique d'identification qui délivre un signal d'identification s'il reconnaît les dites données d'identification;
- une étape de signature pendant laquelle, une commande de signature recueillie sur les moyens d'interface homme-machine (3,4) est transmise dans le boîtier à un circuit protégé (6) qui, si les dites données d'identification sont reconnues par le circuit d'identification, signe une partie au moins des données transactionnelles au moyen d'une clé privée de signature stockée de façon non effaçable dans ledit circuit protégé (6), ledit circuit protégé (6) comprenant par ailleurs une clé publique duale de ladite clé privée, stockée de façon non effaçable, et un numéro d'identification de l'appareil, stocké de façon non effaçable **caractérisé en ce que** pendant l'étape de communication, l'appareil (1) émet à destination du système informatique, une chaîne de caractères comprenant au moins la valeur de la clé publique, accompagnée d'une signature de certification de ladite chaîne de caractères.

8. Procédé pour effectuer des transactions au moyen d'un appareil (1) selon la revendication 7, **caractérisé en ce que** pendant l'étape de signature, ladite partie au moins des données transactionnelles, est concaténée à une deuxième donnée d'identification procurée par le circuit d'identification de façon à ce que la signature au moyen de la clé privée de signature porte sur le résultat de la concaténation.

9. Procédé pour effectuer des transactions au moyen d'un appareil (1) selon l'une des revendications 7 ou 8, **caractérisé en ce qu'**il comprend une étape de communication pendant laquelle la signature est émise par l'appareil (1) à destination d'un système informatique.

## Claims

1. An apparatus (1) for performing transactions comprising a housing having protection against break-ins, in which are integrated:
an interface circuit (10) for receiving an identification support comprising an identification logic circuit;
man/machine interface means (3, 4) for presenting transactional data to a user and for gathering from the user identification data transmitted to the logic circuit of the support via the interface circuit (10) as well as signature commands relating to the transactional data presented;
a protected circuit (6) for delivering a first signature of the transactional data presented in response to the signature commands when the identification has been performed, said signature being obtained by enciphering a part at least of the transactional data by means of a private signature key stored in a nonerasable manner in said protected circuit, said protected circuit (6) containing a public key which is the dual of said private key, stored in a nonerasable manner, an identification number for the apparatus, stored in a nonerasable manner, and a memory (5, 35) containing a signature certifying an origin of the apparatus (1) for delivering said certification signature with said public key.

2. The apparatus (1) for performing transactions as claimed in claim 1, **characterized in that** it comprises a means of communication (12) for exchanging data with a computer system.

3. A method of manufacturing an apparatus (1) for performing transactions, **characterized in that** it comprises:
a burn step (15) during which a pair of dual cryptographic keys is secretly generated, consisting of a public key and of a private key of the apparatus, the private key being burned immediately into a protected circuit (6) in such a way as to not be able to leave any trace outside said protected circuit (6);
a mounting step (16) during which a man/machine interface (3, 4) is mounted on a housing, the protected circuit (6) and an interface circuit (10) are mounted in said housing and during which said housing is closed in such a way as to no longer be able to be opened or entered without leaving a visible trace of break-in.

4. The method of manufacturing an apparatus (1) for performing transactions as claimed in claim 3, **characterized in that** during the burn step (15), the public key is burned into the protected circuit (6).

5. The method of manufacturing an apparatus (1) for performing transactions as claimed in claim 3 or 4, **characterized in that** during the burn step (15), an identification number of the apparatus (1) is burned into the protected circuit (6).

6. The method of manufacturing an apparatus (1) for performing transactions as claimed in one of the claims 3 to 5, **characterized in that** it comprises a certifying step during which a character string comprising at least the public key or the identification number, is enciphered by means of a private manufacturer key, in such a way as to obtain a signature certifying the origin of the apparatus (1) and **in that** this signature is stored in the apparatus.

7. A method for performing transactions by means of an apparatus (1) consisting of a housing which leaves a visible trace of any attempted break-in, said housing comprising man/machine interface means (3, 4) and an interface circuit (10) for interfacing with a physical identification object, **characterized in that** it comprises:
a control step that the housing has no visible trace of break-in;
a presentation step during which at least one transactional data item is communicated to the apparatus (1) which displays it on the man/machine interface means (3, 4);
an identification step during which an identification support comprising an identification logic circuit is placed in contact with the interface circuit (10) and first identification data are gathered from the user by the man/machine interface means (3, 4), then transmitted to the identification logic circuit which delivers an identification signal if it recognizes said identification data;
a signature step during which, a signature command gathered on the man/machine interface means (3, 4) is transmitted in the housing to a protected circuit (6) which, if said identification data are recognized by the identification circuit, signs a part at least of the transactional data by means of a private signature key stored in a nonerasable manner in said protected circuit (6), said protected circuit (6) containing a public key which is the dual of said private key, stored in a nonerasable manner and an identification number for the apparatus, stored in a nonerasable manner.
**characterized in that** during the communication step, the apparatus (1) sends the computing system a character string comprising at least one value of public key, accompanied by a certification signature for certifying said character string

8. The method for performing transactions by means of an apparatus (1) as claimed in claim 7
**characterized in that** during the signature step, said part at least of the transactional data is concatenated with a second identification data item procured by the identification circuit in such a way that the signature by means of the private signature key bears on the result of the concatenation.

9. The method for performing transactions by means of an apparatus (1) as claimed in one of claims 7 or 8, **characterized in that** it comprises a communication step during which the signature is sent by the apparatus (1) to a computer system.

## Patentansprüche

1. Gerät (1) zum Ausführen von Transaktionen, das ein Gehäuse aufweist, das einen Schutz vor Einbrüchen besitzt, in das Folgendes eingebaut ist:
- eine Schnittstellenschaltung (10) zum Empfangen eines ldentifikationsträgers, der eine ldentifikationslogikschaltung aufweist;
- Mensch-Maschinen-Schnittstellenmittel (3, 4), um einem Benutzer Transaktionsdaten zu präsentieren und vom Benutzer Identifikationsdaten zu sammeln, die an die Logikschaltung des Trägers über die Schnittstellenschaltung (10) übertragen werden, sowie Signaturbefehle in Zusammenhang mit den präsentierten Transaktionsdaten;
- eine geschützte Schaltung (6), um eine erste Signatur der Transaktionsdaten, die als Antwort auf die Signaturbefehle präsentiert werden, zu liefern, wenn die Identifikation ausgeführt wurde, wobei die Signatur durch Verschlüsseln mindestens eines Teils der Transaktionsdaten mittels eines privaten Signaturcodes, der nicht löschbar in der geschützten Schaltung gespeichert ist, verschlüsselt wird, wobei die geschützte Schaltung einen dualen öffentlichen Code des privaten Codes enthält, der nicht löschbar gespeichert ist, eine Identifikationsnummer des Geräts, die nicht löschbar gespeichert ist, und einen Speicher (5, 35), der eine Signatur enthält, die einen Ursprung des Geräts (1) zertifiziert, um die Zertifizierungssignatur mit dem öffentlichen Code zu liefern.

2. Gerät (1) zum Ausführen von Transaktionen nach Anspruch 1, **dadurch gekennzeichnet, dass** es ein Kommunikationsmittef (12) zum Austauschen von Daten mit einem EDV-System aufweist.

3. Verfahren zum Herstellen eines Geräts (1) zum Ausführen von Transaktionen, **dadurch gekennzeichnet, dass** es Folgendes aufweist:
- einen Gravüreschritt (15), in dessen Verlauf geheim ein Paar dualer kryptographischer Codes erzeugt wird, das aus einem öffentlichen Code und einem privaten Code des Geräts besteht, wobei der private Code unverzüglich derart in eine geschützte Schaltung (6) graviert wird, dass außerhalb der geschützten Schaltung (6) keinerlei Spur verbleibt;
- einen Montageschritt (16), in dessen Verlauf eine Mensch-Maschinen-Schnittstelle (3, 4) auf ein Gehäuse montiert wird, wobei die geschützte Schaltung (6) und eine Schnittstellenschaltung (10) in das Gehäuse montiert werden und in dessen Verlauf das Gehäuse derart verschlossen wird, dass es nicht mehr geöffnet oder darin nicht mehr eingedrungen werden kann, ohne sichtbare Einbruchsspuren zu hinterlassen.

4. Verfahren zum Herstellen eines Geräts (1) zum Ausführen von Transaktionen nach Anspruch 3, **dadurch gekennzeichnet, dass** der öffentliche Code während des Gravüreschritts (15) in die geschützte Schaltung (6) graviert wird.

5. Verfahren zum Herstellen eines Geräts (1) zum Ausführen von Transaktionen nach Anspruch 3 oder 4, **dadurch gekennzeichnet, dass** während des Gravüreschritts (15) eine Identifikationsnummer des Geräts (1) in die geschützte Schaltung (6) graviert wird.

6. Verfahren zum Herstellen eines Geräts (1) zum Ausführen von Transaktionen nach einem der Ansprüche 3 bis 5, **dadurch gekennzeichnet, dass** es einen Zertifizierungsschritt aufweist, in dessen Verlauf eine Zeichenkette, die mindestens den öffentlichen Code oder die Identifikationsnummer aufweist, mittels eines privaten Herstellercodes derart verschlüsselt wird, dass eine Signatur erzielt wird, die die Herkunft des Geräts (1) zertifiziert, und dass diese Signatur in dem Gerät gespeichert wird.

7. Verfahren zum Ausführen von Transaktionen mittels eines Geräts (1), das aus einem Gehäuse besteht, das eine sichtbare Spur jedes Einbruchsversuchs hinterlässt, wobei das Gehäuse Mensch-Maschinen-Schnittstellenmittel (3, 4) und eine Schnittstellenschaltung (10) mit einem physischen Identifikationsobjekt aufweist, **dadurch gekennzeichnet, dass** es Folgendes aufweist:
- einen Schritt zum Kontrollieren, dass das Gehäuse keine sichtbare Einbruchsspur aufweist;
- einen Präsentationsschritt, in dessen Verlauf dem Gerät (1) mindestens eine Transaktionsinformation kommuniziert wird, wobei das Gerät diese auf den Mensch-Maschinen-Schnittstellenmitteln (3, 4) anzeigt;
- einen Identifikationsschritt, in dessen Verlauf ein Identifikationsträger, der eine Identifikationslogikschaltung aufweist, mit der Schnittstellenschaltung (10) in Kontakt gebracht wird und erste ldentifikationsdaten des Benutzers von den Mensch-Maschinen-Schnittstellenmitteln (3, 4) erhalten und dann an die Identifikationslogikschaltung übertragen werden, die ein Identifikationssignal liefert, wenn sie die Identifikationsdaten erkennt;
- einen Signaturschritt, in dessen Verlauf ein auf den Mensch-Maschinen-Schnittstellenmitteln (3, 4) empfangener Signaturbefehl in dem Gehäuse an eine geschützte Schaltung (6) übertragen wird, die, wenn die ldentifikationsdaten von der Identifikationsschaltung erkannt werden, mindestens einen Teil der Transaktionsdaten mittels eines privaten Signaturcodes, der in der geschützten Schaltung (6) nicht löschbar gespeichert ist, unterzeichnet, wobei die geschützte Schaltung (6) ferner einen dualen öffentlichen Code des privaten Codes aufweist, der nicht löschbar gespeichert ist, und eine Identifikationsnummer des Geräts, die nicht löschbar gespeichert ist, **dadurch gekennzeichnet, dass** das Gerät (1) während des Kommunikationsschritts zu dem EDV-System eine Zeichenkette sendet, die mindestens den Wert des öffentlichen Codes begleitet von einer Zertifizierungssignatur der Zeichenkette aufweist.

8. Verfahren zum Ausführen von Transaktionen mittels eines Geräts (1) nach Anspruch 7, **dadurch gekennzeichnet, dass** der mindestens eine Teil der Transaktionsdaten während des Signaturschritts mit einer zweiten Identifikationsinformation konkateniert wird, die von der Identifikationsschaltung derart beschaffen wird, dass sich die Signatur mittels des privaten Signaturcodes auf das Ergebnis der Konkatenation auswirkt.

9. Verfahren zum Ausführen von Transaktionen mittels eines Geräts (1) nach einem der Ansprüche 7 oder 8, **dadurch gekennzeichnet, dass** es einen Kommunikationsschritt aufweist, in dessen Verlauf die Signatur von dem Gerät (1) zu einem EDV-System gesendet wird.
